# EUROPEAN PATENT APPLICATION

(11) **EP 2 071 202 A1**
(43) Date of publication of application: **17.06.2009**
(21) Application number: 07828631.7
(22) Date of filing: 27.09.2007
(51) Int. Cl.: F16C 33/20, F04C 29/00, F04C 29/02, F16C 33/12

(54) **SLIDE MEMBER AND FLUID MACHINE UTILIZING THE SAME**

(30) Priority: 28.09.2006 JP 2006264341; 27.09.2007 JP 2007250533
(71) Applicant: Daikin Industries, Ltd., Osaka 530-8323 (JP)
(72) Inventor: OHKAWA, Takeyoshi, Sakai-shi Osaka 591-8511 (JP); INOMOTO, Hisashi, Sakai-shi Osaka 591-8511 (JP)
(74) Representative: Goddar, Heinz J.
(86) International application number: PCT/JP2007/068885
(87) International publication number: WO 2008/047561

(57) **Abstract**

An object is to provide a sliding member having reduced mechanical loss due to a smaller slider and possessing high reliability due to improved durability, and to provide a fluidic machine that uses the sliding member. The sliding member (1) has a porous sintered base (2) and a resin composition (3). The porous sintered base (2) is made of a porous sintered compact. The resin composition (3) is coated onto the surface of the porous sintered base (2). The resin layer thickness t1 is obtained by adding 10 µm or more to the pore depth t2. The resin layer thickness t1 is the thickness of the resin composition (3). The pore depth t2 is the depth of the pores (6) exposed on the surface of the porous sintered base (2).

## Description

### TECHNICAL FIELD

The present invention relates to a sliding member and a fluidic machine that uses the sliding member.

### BACKGROUND ART

Fluororesin has excellent abrasion resistance and low friction characteristics, but the fluororesin by itself has poor strength, and it is therefore common to coat the fluororesin onto an iron base. On the other hand, it is difficult to assure that the fluororesin adheres strongly to the base. In view of this situation, various sliding members manufactured by using a porous sintered compact have conventionally been proposed because the anchor effect can be increased and considerable adhesion-improving effects can be expected when a porous sintered metal is used as a base.

The method for manufacturing a sintered sliding element of Patent Document 1 includes a step for sintering a porous molded article, a step for impregnating the resulting sintered compact with a resin, and a step for curing the resin.

The compressor sliding material of Patent Document 2 is manufactured by filling polytetrafluoroethylene (PTFE) or another fluororesin into the pores of a porous iron-based sintered alloy.
<Patent Document 1>
   Japanese Laid-open Patent Application No. 64-11912
<Patent Document 2>
   Japanese Laid-open Patent Application No. 10-88203

### DISCLOSURE OF THE INVENTION

### <Technical Problem>

However, with the method for manufacturing a sintered sliding element of Patent Document 1, a suitable resin layer thickness is not formed in the combination of the porous sintered compact and the resin. Therefore, the adhesiveness between the resin and the base cannot be assured, the base is liable to pierce the resin layer and become exposed due to concavities and convexities on the base surface, and resistance to seizing is degraded. Accordingly, a problem is presented in that it is difficult to reduce mechanical loss due to the smaller slider and to ensure the desired durability due to difficulties in achieving higher reliability.

The compressor sliding material of Patent Document 2 has a drawback in that the resin abrasion resistance is poor because only fluororesin is impregnated, adhesiveness between the resin and the base cannot be assured as in the case of Patent Document 1, and it is difficult to ensure the desired reliability.

An object of the present invention is to provide a sliding member having reduced mechanical loss due to a smaller slider and possessing high reliability due to improved durability, and to provide a fluidic machine that uses the sliding member.

### <Solution to Problem>

A sliding member according a first aspect includes a porous sintered base and a resin composition. The porous sintered base is made of a porous sintered compact. The resin composition is coated onto the surface of the porous sintered base. The resin layer thickness is obtained by adding 10 µm or more to the pore depth. The resin layer thickness is the thickness of the resin composition. The pore depth is the depth of the pores exposed on the surface of the porous sintered base.

In this case, since the thickness of the resin layer is obtained by adding 10 µm or more to the pore depth, adhesiveness between the resin composition and the porous sintered base can be assured, and the porous sintered base is not exposed. Accordingly, mechanical loss due to a smaller slider is reduced and high reliability can be obtained from improved durability.

A sliding member according to a second aspect is the sliding member according to the first aspect, wherein the pore depth is 15 µm or more.

In this case, good adhesion can be obtained between the porous sintered base and the resin composition because the pore depth is 15 µm or more.

A sliding member according to a third aspect is the sliding member according to the first or second aspect, wherein the resin composition includes polyamidoimide and polytetrafluoroethylene.

In this case, excellent abrasion resistance and low friction characteristics can be obtained because the resin composition includes polyamidoimide and polytetrafluoroethylene.

A sliding member according to a fourth aspect is the sliding member according to any one of the first to third aspects, wherein the porosity, which is the volume ratio of the pores to the porous sintered base, is 10 to 30%.

In this case, an effect (anchor effect) for holding the resin composition to the surface of the porous sintered base can be sufficiently obtained while retaining the strength of the porous sintered base because the porosity, which is the volume ratio of the pores to the porous sintered base, is 10 to 30%.

A sliding member according to a fifth aspect is the sliding member according to any one of the first to fourth aspects, wherein the pores exposed on the surface of the porous sintered base are impregnated with the resin composition by vacuum suction.

In this case, the thickness of the impregnation layer can be increased because the pores exposed on the surface of the porous sintered base are impregnated with the resin composition by vacuum suction.

A sliding member according to a sixth aspect is the sliding member according to any one of the first to fifth aspects, wherein the percentage content of oil contained in the porous sintered base is 5 wt% or less.

In this case, substantially no oil is contained inside the porous sintered base, and there is essentially no likelihood of defect (contamination) due to foreign matter because the percentage content of oil contained in the porous sintered base is 5 wt% or less.

A fluidic machine according to a seventh aspect is characterized in including the sliding member according to any of the first to sixth aspects.

In this case, mechanical loss due to a smaller slider in the fluidic machine is reduced and high reliability can be obtained from improved durability because the fluidic machine includes the sliding member according to any of the first to sixth aspects.

A fluidic machine according to an eighth aspect is the sliding member according to the seventh aspect, wherein the sliding member is a bearing.

In this case, adhesiveness between the resin composition and the porous sintered base in the bearing of the fluidic machine can be assured and the porous sintered base is not exposed because the sliding member is a bearing. Accordingly, mechanical loss due to a smaller slider is reduced and high reliability can be obtained from improved durability.

A fluidic machine according to a ninth aspect is the sliding member according to the eighth aspect, wherein the refrigerant used is carbon dioxide.

In this case, the refrigerant used is carbon dioxide, and because carbon dioxide has a high frictional load, the effect is particularly high, mechanical loss due to a smaller slider is reduced, and high reliability can be obtained from improved durability.

### <Advantageous Effects of Invention>

In accordance with the first aspect, adhesiveness between the resin composition and the porous sintered base can be assured, and the porous sintered base is not exposed. Accordingly, mechanical loss due to a smaller slider is reduced and high reliability can be obtained from improved durability.

In accordance with the second aspect, good adhesion can be obtained between the porous sintered base and the resin composition.

In accordance with the third aspect, excellent abrasion resistance and low friction characteristics can be obtained.

In accordance with the fourth aspect, an effect (anchor effect) for holding the resin composition to the surface of the porous sintered base can be sufficiently obtained while retaining the strength of the porous sintered base.

In accordance with the fifth aspect, the thickness of the impregnation layer can be increased.

In accordance with the sixth aspect, substantially no oil is contained inside the porous sintered base, and there is essentially no likelihood of defect (contamination) due to foreign matter.

In accordance with the seventh aspect, mechanical loss due to a smaller slider in the fluidic machine is reduced and high reliability can be obtained from improved durability.

In accordance with the eighth aspect, adhesiveness between the resin composition and the porous sintered base in the bearing of the fluidic machine can be assured and the porous sintered base is not exposed. Accordingly, mechanical loss due to a smaller slider is reduced and high reliability can be obtained from improved durability.

In accordance with the ninth aspect, with carbon dioxide, which has a high frictional load, the effect is particularly high, mechanical loss due to a smaller slider is reduced, and high reliability can be obtained from improved durability.

### BRIEF DESCRIPTION OF THE DRAWINGS

FIG. 1 is a cross-sectional view of a sliding member according to a first embodiment of the present invention.
FIG. 2 is a plan view showing the surface of the porous sintered base without a coating of the resin composition of FIG. 1.
FIG. 3 is a cross-sectional view showing the overall configuration of the scroll compressor to which the sliding member of FIG. 1 has been applied.
FIG. 4 is a graph showing the correlation between the load limit and the effective resin layer thickness at a fixed pore depth.
FIG. 5 is a graph showing the correlation between the load limit and the pore depth at a fixed effective resin layer thickness.
FIG. 6 is a graph showing the change over time in the friction coefficient of the sliding member under non-lubricated sliding conditions.
FIG. 7 is a cross-sectional view of the sliding member according to a second embodiment of the present invention.
FIG. 8 is a plan view showing the surface of the porous sintered base without a coating of the resin composition of FIG. 7.
FIG. 9 is a diagram showing the peel width in the adhesive strength test method according to the second embodiment of the present invention.

### EXPLANATION OF THE REFERENCE NUMERALS

- 1: sliding member
- 2: porous sintered base
- 3: resin layer
- 3a: resin-only layer
- 3b: impregnation layer
- 6: pore
- 71: sliding member
- 72: porous sintered base
- 73: resin layer
- 73a: resin-only layer
- 73b: impregnation layer
- 76: pore
- 78: oxide film

### BEST MODE FOR CARRYING OUT THE INVENTION

Embodiments of a sliding member according to the present invention will next be described with reference to the drawings.

### <Embodiment 1>

### <Configuration of sliding member 1>

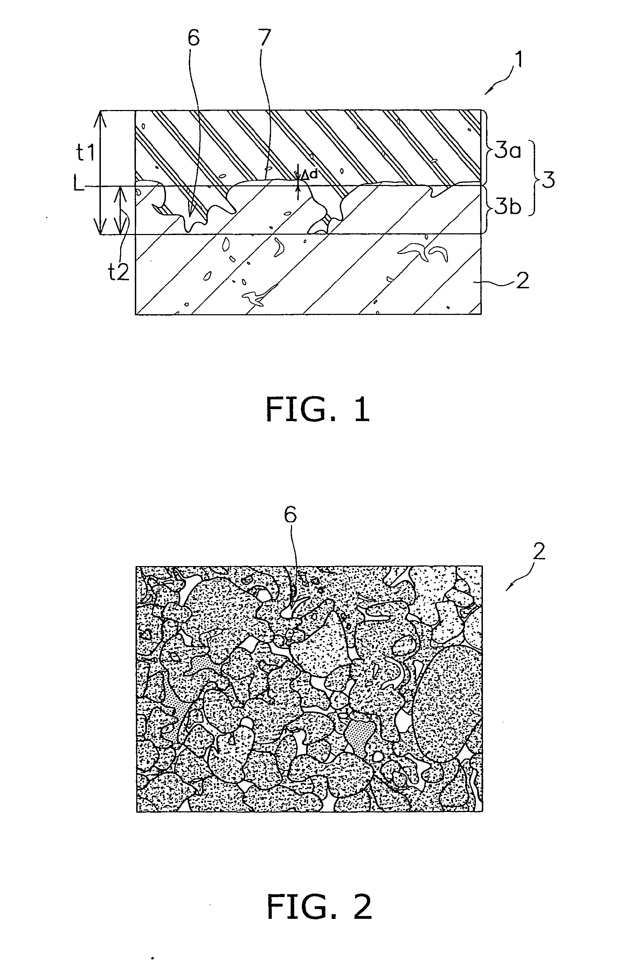

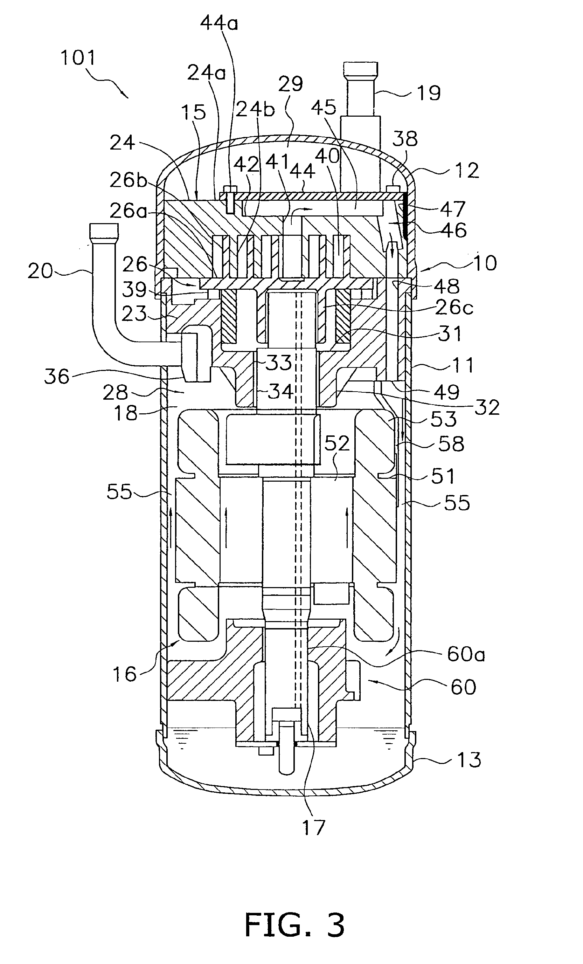

A sliding member 1 shown in FIG. 1 can be applied to a bearing of a scroll compressor (e.g., the high-low pressure dome type compressor 101 shown in FIG. 3), more specifically, the bearing metal or the like of the bearing that is in contact with the shaft. The bearing metal has, e.g., an inside diameter of 20 to 40 mm, an outside diameter of about 25 to 50 mm, and a thickness of about 2.5 to 5 mm.

The sliding member 1 is provided with a porous sintered base 2 made of a porous sintered compact, and a resin composition 3 coated onto the surface (see FIG. 2) in which pores 6 of the porous sintered base 2 are exposed, as shown in FIG. 1. The porous sintered base 2 is manufactured by sintering iron or another metal powder.

The resin composition 3 has a resin-only layer 3a for covering the surface of the porous sintered base 2, and an impregnation layer 3b impregnated into the pores 6 that are exposed on the surface of the porous sintered base 2. The resin composition 3 is coated onto the surface of the porous sintered base 2 using a sprayer or a dispenser. In both coating methods, the filling ratio of the pores 6 is improved by vacuum suction from the opposite side of the resin-coated surface.

A resin layer thickness t1, which is the thickness of the resin composition 3, is a size obtained by adding 10 µm or more (preferably 20 µm or more) to a pore depth t2, which is the depth of the pores 6 exposed on the surface of the porous sintered base 2, as shown in FIG. 1. Adhesiveness between the porous sintered base 2 and the resin composition 3 can thereby be assured and the porous sintered base 2 is not exposed. The porous sintered base 2 is liable to be exposed when the resin layer thickness t1 is less than t2 + 10 µm. On the other hand, when the resin layer thickness t1 exceeds 200 µm, there is a drawback in that the adhesiveness with the resin composition 3 is reduced.

FIG. 1 is a cross-sectional view of the surface of the sliding member 1 in which the resin layer thickness t1 is 90 µm and the pore depth t2 is 30 µm.

The difference Δd from the average surface height L due to the concavities and convexities on the coated surface 7 of the porous sintered base 2 is ±5 µm. Therefore, the resin layer thickness t1 must be t2 + 10 µm or more so that the porous sintered base 2 does not pierce the resin-only layer 3a and become exposed.

Good adhesiveness between the porous sintered base 2 and the resin composition 3 can be obtained because the pore depth t2 is 10 µm or more (preferably 20 µm or more). Adhesiveness cannot be assured when the thickness t2 of the impregnation layer 3b is less than 10 µm. On the other hand, when the pore depth t2 exceeds 100 µm, there is a drawback in that impregnation of the resin composition 3 becomes difficult.

Excellent abrasion resistance and low friction characteristics (i.e., slipping characteristics) can be obtained because the resin composition 3 includes polyamidoimide (PAI) and polytetrafluoroethylene (PTFE).

Specifically, the resin composition 3 includes PTFE or another fluororesin dispersed in PAI. The resin composition 3 furthermore includes calcium fluoride or the like in addition to PAI and PTFE.

The porosity, which is the volume ratio of the pores 6 to the porous sintered base 2, is 10 to 30%, and an anchor effect for holding the resin composition 3 to the surface of the porous sintered base 2 can be sufficiently obtained while retaining the strength of the porous sintered base 2. FIG. 2 shows the surface of the porous sintered base 2 without the coating of the resin composition 3, and the porosity of the porous sintered base 2 is about 20%.

The resin composition 3 is impregnated into the pores 6 exposed on the surface of the porous sintered base 2 by vacuum suction from the opposite side of the resin-coated surface. Vacuum suction is carried out during or after the application of the resin composition 3. Vacuum suction is carried out by forming a negative pressure on the back surface of the porous sintered base 2 and causing the resin composition 3 to be impregnated from the surface of the porous sintered base 2, whereby the thickness of the impregnation layer 3b can be increased.

The percentage content of oil contained in the porous sintered base 2 is 5 wt% or less. Therefore, substantially no oil is contained inside the porous sintered base 2, and there is essentially no likelihood of defect (contamination) due to foreign matter.

The sliding member 1 is used as a slider of a scroll-type high-low pressure dome type compressor 101 described below.

### <Overall configuration of high-low pressure dome type compressor 101>

The high-low pressure dome type compressor 101 according to the first embodiment constitutes a refrigerant circuit together with an evaporator, a condenser, an expansion mechanism, and the like; acts to compress a gas refrigerant in the refrigerant circuit; and is primarily composed of a longitudinally cylindrical hermitically sealed dome type casing 10, a scroll compression mechanism 15, an Oldham ring 39, a drive motor 16, a lower main bearing 60, a suction tube 19, and a discharge tube 20.

The sliding member 1 of the first embodiment can be applied to at least one component among a pin bearing part 26c of a movable scroll 26, a bearing 34 of an upper housing 23, and a bearing part 60a of a lower main bearing 60. The sliding member 1 can be applied to a pin bearing (internal periphery of the piston), a main bearing (front head), a secondary bearing (rear head), and other components when application is made to a swing compressor or the like.

The constituent elements of the high-low pressure dome type compressor 101 will be described in detail below.

### <Details of the constituent elements of high-low pressure dome type compressor 101>

### (1) Casing

The casing 10 has a substantially cylindrical trunk casing 11, a saucer-shaped upper wall portion 12 welded in an airtight manner to an upper end of the trunk casing 11, and a saucer-shaped lower wall portion 13 welded in an airtight manner to a lower end of the trunk casing 11. Primarily accommodated in the casing 10 are the scroll compression mechanism 15 for compressing gas refrigerant, and the drive motor 16 disposed below the scroll compression mechanism 15. The scroll compression mechanism 15 and the drive motor 16 are connected by a drive shaft 17 disposed so as to extend in the vertical direction inside the casing 10. As a result, a clearance space 18 is formed between the scroll compression mechanism 15 and the drive motor 16.

### (2) Scroll compression mechanism

The scroll compression mechanism 15 is primarily composed of a housing 23, a fixed scroll 24 provided in close contact above the housing 23, and the movable scroll 26 for meshing with the fixed scroll 24, as shown in FIG. 3. The constituent elements of the scroll compression mechanism 15 will be described in detail below.

### a) Housing

The housing 23 is press-fitted and secured to the trunk casing 11 across the entire external peripheral surface of the housing in the peripheral direction. In other words, the trunk casing 11 and the housing 23 are in kept close contact in an airtight manner across the entire periphery. For this reason, the interior of the casing 10 is partitioned into a highpressure space 28 below the housing 23, and a low-pressure space 29 above the housing 23. Also, the fixed scroll 24 is fastened and secured by a bolt 38 to the housing 23 so that the upper end surface is in close contact with the lower end surface of the fixed scroll 24. A housing concavity 31 concavely disposed in the center of the upper surface, and a bearing portion 32 that extends downward from the center of the lower surface, are formed in the housing 23. A bearing hole 33 that passes through in the vertical direction is formed in the bearing portion 32, and a drive shaft 17 is rotatably fitted to the bearing hole 33 via the a shaft bearing 34.

### b) Fixed scroll

The fixed scroll 24 is primarily composed of an end plate 24a and a spiral (involute shape) wrap 24b formed on the lower surface of the end plate 24a. A discharge channel 41 that is in communication with a compression chamber 40 (described later), and an enlarged concave portion 42 that is in communication with the discharge channel 41, are formed in the end plate 24a. The discharge channel 41 is formed so as to extend in the vertical direction in the center portion of the end plate 24a. The enlarged concave portion 42 is composed of a concave portion that is concavely provided to the upper surface of the end plate 24a and widens in the horizontal direction. A lid body 44 is fastened and secured using a bolt 44a to the upper surface of the fixed scroll 24 so as to cover the enlarged concave portion 42. A muffler space 45 composed of an expansion chamber for muffling the operation noise of the scroll compression mechanism 15 is formed by covering the enlarged concave portion 42 with the lid body 44. The fixed scroll 24 and the lid body 44 are sealed by close contact via packing, which is not depicted.

### c) Movable scroll

The movable scroll 26 is primarily composed of an end plate 26a, a spiral (involute shape) wrap 26b formed on the upper surface of the end plate 26a, a bearing portion 26c formed on the lower surface of the end plate 26a, and a groove portion 26d formed in the both ends of the end plate 26a, as shown in FIG. 3. The movable scroll 26 is supported by the housing 23 via an Oldham ring 39 (described later) fitted into the groove portion. The upper end of the drive shaft 17 is fitted into the bearing portion 26c. The movable scroll 26, by being incorporated into the scroll compression mechanism 15 in this manner, nonrotatably orbits the interior of the housing 23 due to the rotation of the drive shaft 17. The wrap 26b of the movable scroll 26 meshes with the wrap 24b of the fixed scroll 24, and the compression chamber 40 is formed between the contact portions of the two wraps 24b, 26b. In the compression chamber 40, the capacity between the both wraps 24b, 26b contracts toward the center in accompaniment with the orbiting of the movable scroll 26. In the high-low pressure dome type compressor 101 according to the first embodiment, gas refrigerant is designed to be compressed in this manner.

### d) Other

A communication channel 46 is formed in the scroll compression mechanism 15 across the fixed scroll 24 and the housing 23. The communication channel 46 is formed so that a scroll-side channel 47, notched and formed in the fixed scroll 24, and a housing-side channel 48, notched and formed in the housing 23, are in communication with each other. The upper end of the communication channel 46, i.e., the upper end of the scroll-side channel 47, opens to the enlarged concave portion 42, and the lower end of the communication channel 46, i.e., the lower end of the housing-side channel 48, opens to the lower end surface of the housing 23. In other words, a discharge port 49 through which the refrigerant of the communication channel 46 flows out to the clearance space 18 is constituted by the lower end opening of the housing-side channel 48.

### (3) Oldham ring

An Oldham ring 39 is a member for preventing the movable scroll from rotating, as described above, and is fitted into an Oldham groove (not shown) formed in the housing 23. The Oldham groove is an elliptical groove disposed in a position that faces the housing 23.

### (4) Drive motor

The drive motor 16 is a DC motor in the present embodiment, and is primarily composed of an annular stator 51 secured to the inner wall surface of the casing 10, and a rotor 52 rotatably accommodated with a small gap (air gap channel) inside the stator 51. The drive motor 16 is disposed so that the upper end of a coil end 53 formed at the upper end of the stator 51 is at substantially the same height position as the lower end of the bearing portion 32 of the housing 23.

A copper wire is wrapped around the teeth portion of the stator 51, and coil ends 53 are formed above and below the stator. The external peripheral surface of the stator 51 is provided with core-cut portions that have been notched and formed in a plurality of locations from the upper end surface to the lower end surface of the stator 51 at prescribed intervals in the peripheral direction. A motor cooling channel 55 that extends in the vertical direction is formed by the core-cut portions between the trunk casing 11 and the stator 51.

A rotor 52 is drivably connected to the movable scroll 26 of the scroll compression mechanism 15 via the drive shaft 17 disposed in the axial center of the trunk casing 11 so as to extend in the vertical direction. A guide plate 58 for guiding the refrigerant that has flowed out of the discharge port 49 of the communication channel 46 to the motor cooling channel 55 is disposed in the clearance space 18.

### (5) Lower main bearing

The lower main bearing 60 is disposed in a lower space below the drive motor 16. The lower main bearing 60 is secured to the trunk casing 11, constitutes the lower end-side bearing of the drive shaft 17, and supports the drive shaft 17 in the bearing part 60a of the lower main bearing 60.

### (6) Suction tube

The suction tube 19 is used for guiding the refrigerant of the refrigerant circuit to the scroll compression mechanism 15, and is fitted in an airtight manner into the upper wall portion 12 of the casing 10. The suction tube 19 passes through the low-pressure space 29 in the vertical direction, and the inside end portion is fitted into the fixed scroll 24.

### (7) Discharge tube

The discharge tube 20 is used for discharging the refrigerant inside the casing 10 to the exterior of the casing 10, and is fitted in an airtight manner into the trunk casing 11 of the casing 10. The discharge tube 20 has an inside end portion 36 formed in the shape of a cylinder extending in the vertical direction and secured to the lower end portion of the housing 23. The inside end opening of the discharge tube 20, i.e., the inlet, is opened downward.

### <Examples>

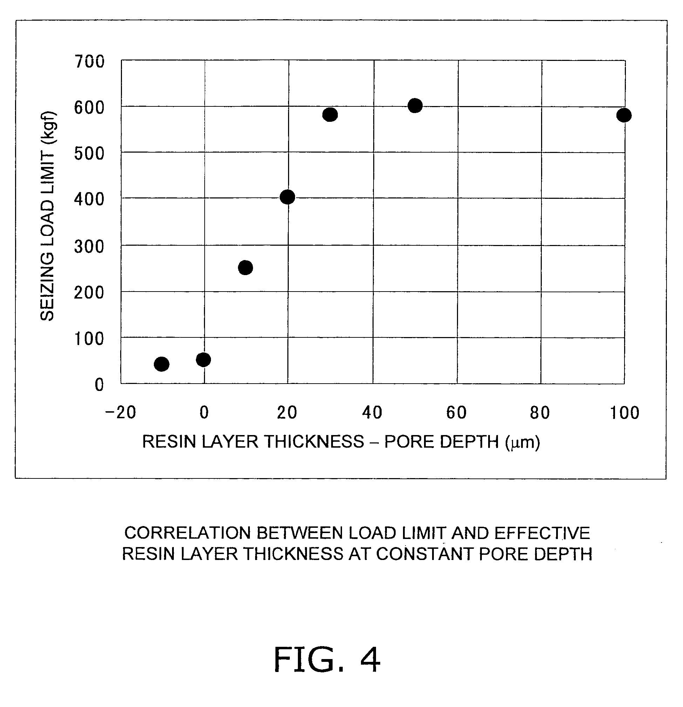

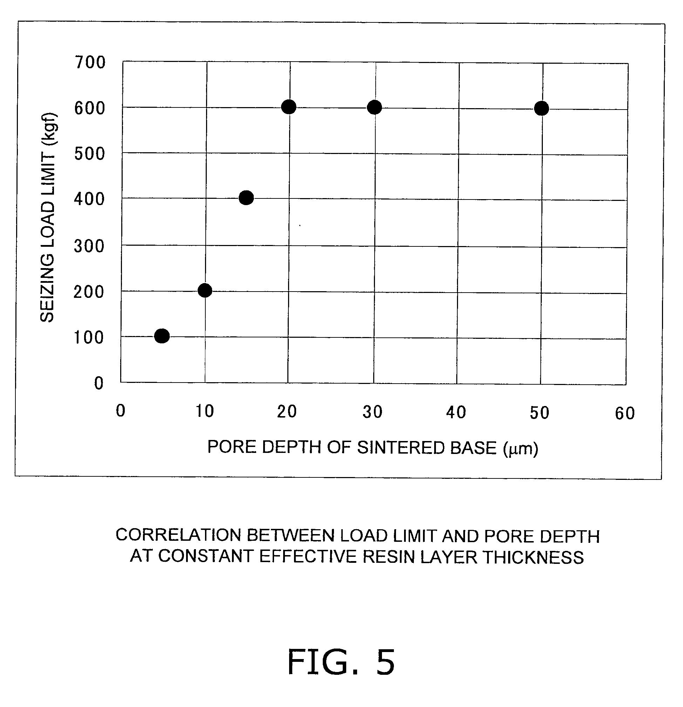

The following test methods were used to obtain the test results showing the correlation between the load limit and the resin layer thickness/pore depth (FIG. 4 and TABLE 1), and the correlation between the load limit and the pore depth (FIG. 5 and TABLE 2).

### <Test Method>

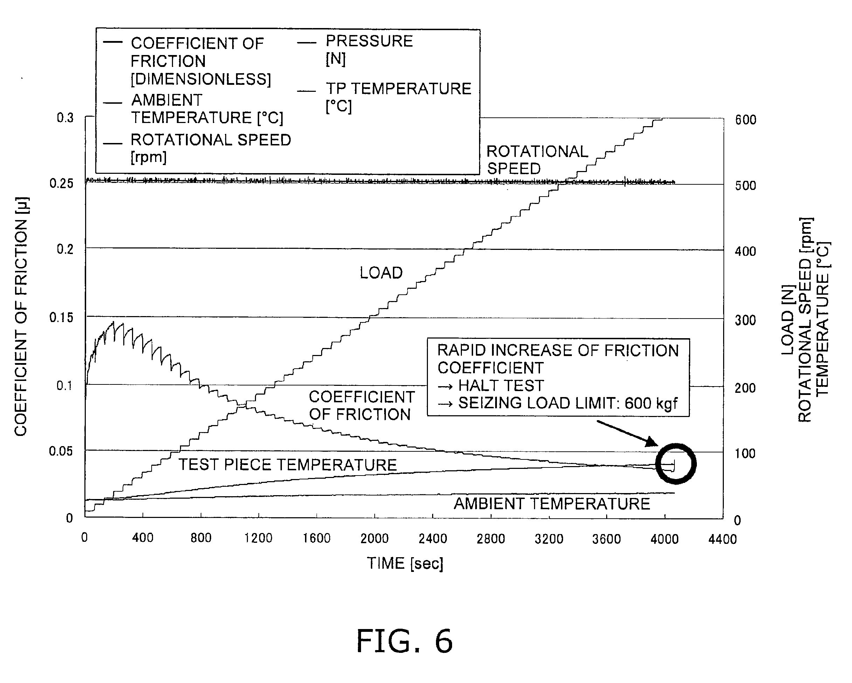

- Sample evaluation process
   - Sintered base:
      Pure iron-based P1022 (density 5.8g/cm3) used
         → Attached Table 2 of JIS 2550 (Sinter material for mechanical structural components)
   - Coating material: resin composition
      Based on the weight ratio, for a PAI weight ratio of 50 to 60%: a PTFE ratio of 20 to 30%, a calcium fluoride ratio of 10 to 20%, and an alumina ratio of 1 to 5%
   - Coating method:
      Sprayer
      Dispenser
   - Baking conditions
      Baking was carried out at 200 to 300°C for about 30 to 60 minutes.
   - Disk machining: Lapping
- Evaluation
   - TP shape
      Sintered material: A resin-coated, disk-shaped, iron-based sinter: OD φ50, ID φ26 × H13
      Counterpart material: Rounded pins (R6; distal end width: 4 mm) secured to a three-pronged mounting jig
   - Conditions: Dry atmosphere, PV
      As shown in the graph of FIG. 6, the seizing load limit was defined as the load at which the friction coefficient rapidly increases under a rotational speed of 0.5 m/s and non-lubricated sliding conditions in atmosphere.
      - The tested sample had a portion of the resin peeled away, and adhesive strength could be evaluated in relative terms using the seizing load limit.
- Test results:
   Correlation between the load limit and the resin layer thickness/pore depth (FIG. 4 and TABLE 1), and correlation between the load limit and the pore depth (FIG. 5 and TABLE 2)

**<TABLE 1>**

| | Resin layer thickness | Pore depth of the sintered base | Resin layer thickness/pore depth | Seizing load limit |
|---|---|---|---|---|
| Comparative examples | 20 µm | 30 µm | -10 µm | 40 N |
| | 30 µm | 30 µm | 0 µm | 50 N |
| Examples | 40 µm | 30 µm | 10 µm | 250 N |
| | 50 µm | 30 µm | 20 µm | 400 N |
| | 60 µm | 30 µm | 30 µm | 580 N |
| | 80 µm | 30 µm | 50 µm | 600 N |
| | 130 µm | 30 µm | 100 µm | 580 N |

**<TABLE 2>**

| | Resin layer thickness | Pore depth of the sintered base | Resin layer thickness/pore depth | Seizing load limit |
|---|---|---|---|---|
| Comparative examples | 20 µm | 5 µm | 20 µm | 100 N |
| | 30 µm | 10 µm | 20 µm | 200 N |
| Examples | 35 µm | 15 µm | 20 µm | 400 N |
| | 40 µm | 20 µm | 20 µm | 600 N |
| | 50 µm | 30 µm | 20 µm | 600 N |
| | 70 µm | 50 µm | 20 µm | 600 N |

Among the test results (TABLES 1 and 2; FIGS. 4 and 5) obtained by the test method described above, the resin layer thickness t1 in the examples of TABLE 1 was obtained by adding 10 µm or more to a pore depth t2 (t2 + 10 µm or more), as can be seen in particular in TABLE 1. In this case, the seizing load limit was high and seizing was less likely to occur because the sintered base was not exposed. On the other hand, in the comparative example of TABLE 1, the sintered base was exposed because the resin layer thickness t1 was less than t2 + 10 µm. Therefore, the seizing load limit was very low and seizing readily occurred.

It is apparent from the graph in FIG. 4 that exposure of the sintered base is reduced and seizing is less likely to occur when the resin layer thickness t1 is equal to pore depth t2 + 10 µm or more, and exposure of the sintered base is further reduced and seizing is even less likely to occur when the resin layer thickness t1 is equal to pore depth t2 + 10 µm or more. When the resin layer thickness t1 is t2 + 20 µm or more, the seizing load limit is constant. Therefore, resistance to seizing is substantially the same even when the resin layer thickness t1 is equal to or greater than the above stated value.

It is apparent from the graph in FIG. 5 that the anchor effect for holding the resin to the surface of the sintered base is increased and the adhesiveness and resistance to seizing are improved when the pore depth t2 is 15 µm or more. When t2 is 20 µm or more, the anchor effect is further increased and the adhesiveness and resistance to seizing are further improved. When the pore depth t2 is 20 µm or more, the seizing load limit is constant. Therefore, resistance to seizing is substantially the same even when the pore depth t2 is equal to or greater than the above stated value.

### <Characteristics of the first embodiment>

(1) In the sliding member 1 of the first embodiment, the resin layer thickness t1 of the resin composition 3 is a thickness obtained by adding 10 µm or more (preferably 20 µm or more) to the pore depth t2 of the pores 6. Therefore, adhesiveness between the porous sintered base 2 and the resin composition 3 can be assured and the porous sintered base 2 is not exposed. Accordingly, the mechanical loss due to a smaller slider is reduced and high reliability can be obtained from improved durability.
(2) In the sliding member 1 of the first embodiment, good adhesiveness between the porous sintered base 2 and the resin composition 3 can be obtained because the pore depth t2 is 15 µm or more (preferably 20 µm or more).
(3) In the sliding member 1 of the first embodiment, excellent abrasion resistance and low friction characteristics can be obtained because the resin composition 3 includes polyamidoimide (PAI) and polytetrafluoroethylene (PTFE).
(4) In the sliding member 1 of the first embodiment, the porosity, which is the volume ratio of pores 6 to the porous sintered base 2, is 10 to 30%. Therefore, an anchor effect for holding the resin composition 3 to the surface of the porous sintered base 2 can be sufficiently obtained while retaining the strength of the porous sintered base 2.
(5) In the sliding member 1 of the first embodiment, the impregnation layer 3b can be made thicker because the resin composition 3 is impregnated by vacuum suction into the pores 6 exposed on the surface of the porous sintered base 2.
(6) In the sliding member 1 of the first embodiment, the percentage content of oil contained in the porous sintered base 2 is 5 wt% or less. Therefore, substantially no oil is contained inside the porous sintered base 2, and there is essentially no likelihood of defect (contamination) due to foreign matter.
(7) In the first embodiment, the high-low pressure dome type compressor 101, which is a fluidic machine, is provided with the sliding member 1. Therefore, mechanical loss due to a smaller slider in a fluidic machine is reduced, and high reliability from improved durability can be obtained.
(8) In the first embodiment, the sliding member 1 is used as a bearing of the high-low pressure dome type compressor 101. Therefore, adhesiveness between the resin composition and the porous sintered base in the bearing can be assured and the porous sintered base is not exposed. Accordingly, the mechanical loss due to a smaller slider is reduced and high reliability can be obtained from improved durability.
(9) The refrigerant used in the compressor, which is a fluidic machine, may be carbon dioxide. With carbon dioxide, which has a high frictional load, the effect is particularly high, mechanical loss due to a smaller slider is reduced, and high reliability can be obtained from improved durability.

### <Second embodiment>

A sliding member 71 of a second embodiment is different from the sliding member 1 of the first embodiment in that an oxide film 78 is formed on the surface of a porous sintered base 72 in order to prevent rusting and oil leakage, but the configuration is otherwise the same. The sliding member 71 on which the oxide film 78 has been formed will be described below.

### <Configuration of sliding member 71>

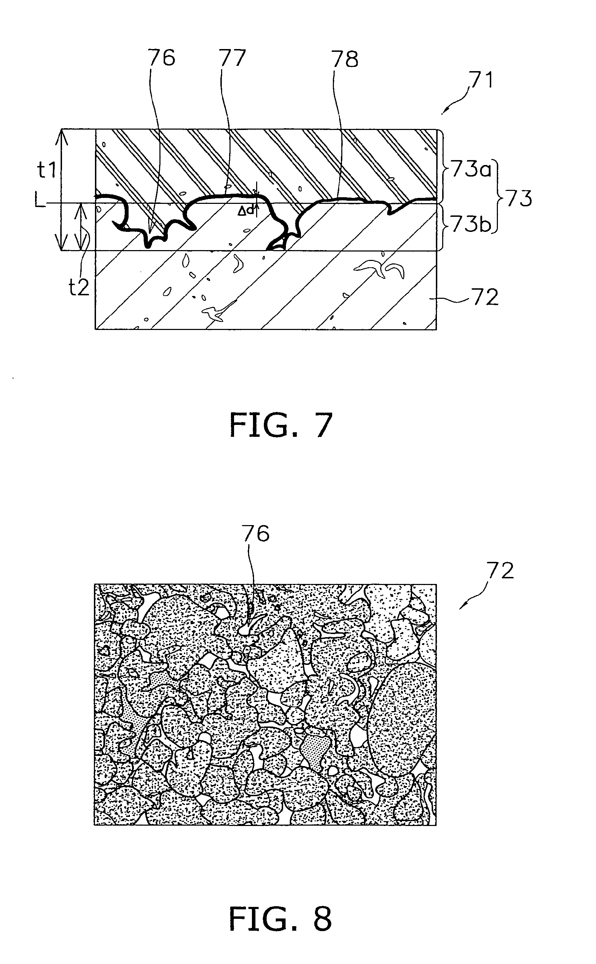

The sliding member 71 shown in FIG. 7 can be applied to a bearing of a scroll compressor (e.g., the high-low pressure dome type compressor 101 of FIG. 3), more specifically, the bearing metal or the like of the bearing that is in contact with the shaft, as in the case of the sliding member 1 of FIG. 1. The bearing metal may have the following dimensions, for example: an inside diameter of 20 to 40 mm, an outside diameter of about 25 to 50 mm, and a thickness of about 2.5 to 5 mm.

The sliding member 71 is provided with the porous sintered base 72 composed of a porous sintered compact; an oxide film 78 formed by oxidizing the surface of the porous sintered base 72 (see FIG. 8) on which the pores 76 of the porous sintered base 72 are exposed, as shown in FIG. 7; and a resin composition 73 coated onto the surface of the oxide film 78. The porous sintered base 72 is manufactured by sintering iron or another metal powder.

The oxide film 78 is formed by treating the porous sintered base 72 with steam. Specifically, the oxide film 78 composed of a black Fe₃O₄ having a predetermined thickness (about several microns) is formed to a uniform thickness by being heated to a predetermined temperature range (e.g., 500 to 560°C) in a water vapor-atmosphere oven. The oxide film 78 is formed to a uniform thickness on the inner surface of the pores 76 exposed on the surface of the porous sintered base 72, as shown in FIG. 7.

The resin composition 73 has a resin-only layer 73a for covering the surface (specifically, the surface of the porous sintered base 72 covered by the oxide film 78) of the porous sintered base 72, and an impregnation layer 73b impregnated inside the pores 76 of the porous sintered base 72. The resin composition 73 is coated onto the oxide film 78 on the surface of the porous sintered base 72 using a spray or a dispenser.

Excellent abrasion resistance and low friction characteristics (i.e., slipping characteristics) can be obtained because the resin composition 73 includes polyamidoimide (PAI) and polytetrafluoroethylene (PTFE). Specifically, the resin composition 73 includes PTFE or another fluororesin dispersed in PAI. The resin composition 73 furthermore includes calcium fluoride or the like in addition to PAI and PTFE.

As in the case of the resin composition 3 of the first embodiment, the resin layer thickness t1, which is the thickness of the resin composition 73, is preferably a thickness obtained by adding 10 µm or more (preferably 20 µm or more) to the pore depth t2, which is the depth of the pores 76 exposed on the surface of the porous sintered base 72, as shown in FIG. 7. Adhesiveness between the porous sintered base 72 and the resin composition 73 can thereby be assured and the porous sintered base 72 is not exposed. The porous sintered base 72 is liable to be exposed when the resin layer thickness t1 is less than t2 + 10 µm. On the other hand, when the resin layer thickness t1 exceeds 200 µm, there is a drawback in that the adhesiveness with the resin composition 73 is reduced.

FIG. 7 is a cross-sectional view of the surface of the sliding member 71 having a resin layer thickness t1 of 90 µm and a pore depth t2 of 30 µm. Since the thickness of the oxide film 78 is about several microns, the resin layer thickness t1, which is the thickness of the resin composition 73, is sufficiently thicker than the oxide film 78.

Good adhesiveness between the porous sintered base 72 and the resin composition 73 can be obtained because the pore depth t2 is 10 µm or more (preferably 20 µm or more). Adhesiveness cannot be assured when the pore depth t2 of the impregnation layer 73b is less than 10 µm. On the other hand, when the pore depth t2 exceeds 100 µm, there is a drawback in that impregnation of the resin composition 73 becomes difficult.

The porosity, which is the volume ratio of pores 76 to porous sintered base 72, is 10 to 30%, and an anchor effect for holding the resin composition 73 to the surface of the porous sintered base 72 can be sufficiently obtained while retaining the strength of the porous sintered base 72. FIG. 8 shows the surface of the porous sintered base 72 without the coating of the resin composition 73, and the porosity of the porous sintered base 72 is about 20%.

The resin composition 73 is impregnated into the pores 76 exposed on the surface of the porous sintered base 72.

The sliding member 71 is also used as a slider of the scroll-type high-low pressure dome type compressor 101 described above as in the case of the sliding member 1 of the first embodiment.

### <Method for testing the adhesive strength>

In the second embodiment, a quantitative crosscut test was carried out in the manner described below in order to accurately measure the adhesive strength of the resin composition 73 formed on the surface of the porous sintered base 72 of the sliding member 71.

Conventionally, in order to measure the adhesive strength of a resin layer formed on the surface of a metal base, the adhesive strength of a resin coating is evaluated by cutting notches at equal intervals in the resin coating, attaching adhesive tape to the notched portion, and thereafter peeling the tape away to determine the spacing of the notched portion at the limit at which the resin coating is peeled away. However, it is difficult to quantitatively evaluate adhesive strength using such an evaluation method. There is also a problem in that adhesion with the tape is degraded in the case of a fluororesin or another resin layer that has poor wettability. A test of adhesive strength by the peeling tape method cannot be carried out with good reproducibility when the resin layer is not formed on a flat plate, e.g., in the case of a cylindrical internal peripheral surface or the like.

In view of the above, tape peeling is not used in the second embodiment, but rather an adhesive strength test method is used that can accurately evaluate the adhesive strength of a resin layer for a fluororesin layer or a curved resin layer.

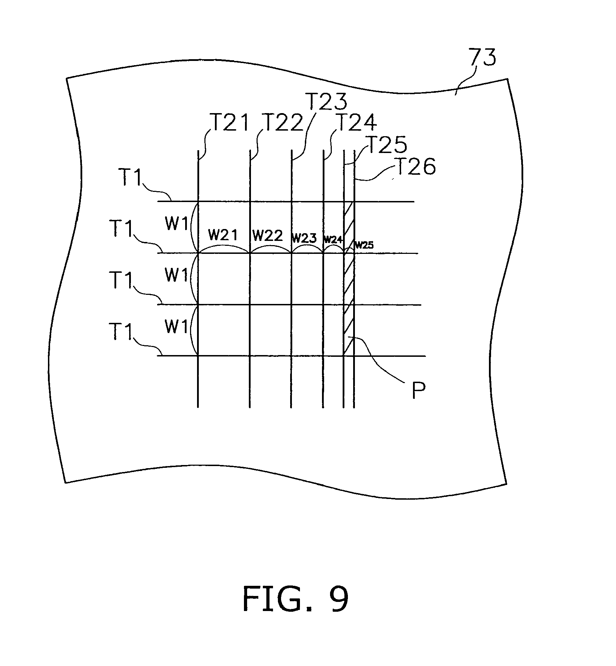

Specifically, notches T1 that extend in the horizontal direction are formed in longitudinal alignment at equal intervals on the surface of the resin composition 73, and notches T21 to T26 that extend in the longitudinal direction are formed in horizontal alignment at different intervals, as shown in FIG. 9. Accordingly, the notch width W1 in the longitudinal direction is constant, and the notch widths W21, W22, W23, W24, and W25 in the horizontal direction are arranged so as to vary by a predetermined variable distance.

Consequently, notches are made in the form of a matrix having variable horizontal widths (W21 to W25; e.g., variable from 2.0 mm to 0.2 mm in increments of 0.2 mm) in the surface of the resin composition 73, as shown in FIG. 9, whereby the location at which natural peeling of the resin composition 73 occurs (i.e., the peel width, which is the largest notch width at which peeling starts) is measured at any of the notch widths W21 to W25 (see peeled portion P of FIG. 9). This method allows the adhesive strength of the resin composition 73 to be accurately measured in quantitative terms. Here, the evaluation shows that the strength of adhesion between the resin composition 73 and the porous sintered base 72 increases as the peel widths W21 to W25 decrease, and the adhesive strength is reduced as the peel widths W21 to W25 increase.

In the method for testing adhesive strength, the portions (so-called islands) enclosed by the grid squares formed by notching are preferably rectangular, but the test can also be carried out using a rhombic shape.

Also, in the method for testing adhesive strength, the surface of the resin composition 73 is not limited to a flat plate, and it is also possible to make an evaluation using an arcuate shape or a concavo-convex shape.

For example, when the adhesive strength of the resin coating formed on the inside periphery of the cylindrical base is measured using the method for testing adhesive strength, first, (i) rectilinear notches are made in an aligned fashion at equal intervals about the cylindrical internal periphery along the axial direction of the cylinder on the internal peripheral surface of the cylinder. Next, (ii) circular notches are made in an aligned fashion in the axial direction at different intervals along the circumferential direction of the cylinder in the internal peripheral surface of the cylinder. Next, (iii) the adhesive strength is found by observation using a microscope or the like to determine the interval at which natural peeling of the resin coating occurs (i.e., peel width).

Here, spiral notches may be used instead of circular notches formed in the circumferential direction. In such a case, the interval between adjacent notches differs and the peel width can be measured by gradually reducing the pitch of the spiral.

The quantitative crosscut test is described in greater detail below.

### <Description of the quantitative crosscut test>

1. Method for fabricating samples
   Three samples Nos. 1 to 3 that correspond to the comparative examples 1 and 2 and the example of the present invention were fabricated, and each of the samples was subjected to the quantitative crosscut test, as shown in TABLE 3. Sample Nos. 1 to 3 are described in detail below.
   - Sample No. 1: S45C + manganese phosphate treatment
      A coating was applied to the internal periphery of a base obtained by performing a manganese phosphate film treatment on an S45C cylinder, which was then baked.
   - Sample No. 2: Sintered base (without steam treatment)
      The sintered base (JPMA SMF 4040) was sintered, after which no steam treatment was carried out. A coating was applied to the internal periphery of the base as in the case of sample No. 1, after which the base was baked.
   - Sample No. 3: Sintered base (with steam treatment)
      The sintered base (JPMA SMF 4040) was sintered and then treated with steam. A coating was applied to the internal periphery of the base as in the case of sample No. 1, after which the base was baked.
      JPMA SMF 4040 as used herein is an iron-copper-based metal powder stipulated in the Japanese Powder Metallurgy Association Specification.
      The steam treatment in the present test is a treatment for obtaining a black Fe₃O₄ film by heating the material to 500 to 560°C in a water vapor-atmosphere oven.
2. Shape of the sample for quantitative crosscut test
   - Shape of the sintered base
      OD φ44.4 (outside diameter: mm), ID φ34.0 (inside diameter: mm), H29
   - Coating and machining
      The inside diameter of the base was coated by dispenser coating.
      A base having a thickness of 100 to 150 µm at the time of sintering was brought to a thickness of 40 to 60 µm at the time of testing by inside-diameter cutting.
   - Machining for the quantitative crosscut test
      The samples were divided into two or four pieces in order to make notches in the internal periphery of the cylindrical sample.
3. The method for carrying out the quantitative crosscut test is described in detail below in the section titled <Method for carrying out the quantitative crosscut test>.
4. Results of quantitative crosscut test

The results of the quantitative crosscut test are as shown in TABLE 3.

**<TABLE 3>**

| No. | | Base | Evaluation results of the quantitative crosscut (units: mm) | |
|---|---|---|---|---|
| | | | Measured value | Mean value |
| 1 | Comparative example 1 | S45C + manganese phosphate | 1.00, 1.20, 1.21 | 1.13 |
| 2 | Comparative example 2 | Sintering (no steam treatment) | 0.80, .093, 1.14 | 0.96 |
| 3 | Example | Sintering (with steam treatment) | 0.41, 0.30, 0.27 | 0.33 |

The following is apparent from the test results of TABLE 3.
- Adhesion can be increased using manganese phosphate when a sintered base is used (the anchor effect can be increased when a sintered base is used.).
- Adhesion can be improved using a steam treatment (sample No. 3) in comparison with the case in which the steam treatment is not performed (sample No. 2).
   Based on the above, in the example of the present invention (for sample No. 3), it is apparent that an effect of improved adhesion can be obtained by using steam treatment after sintering.

### <Method for carrying out the quantitative crosscut test>

1. Apparatus
   A notching tool having a blade edge of good quality is required.
2. Guide
   A guide having an equidistant spacer may be used when a single notching tool is used for making notches at equal intervals.
3. Adhesive tape
   Adhesive tape (an adhesive strength of 10 ±1 N per 25 mm of width) may be used when a film that has lost its adhesive strength is removed.
4. Observation device
   An optical microscope having a magnification of about 100 to 300 times is used.
5. Test piece
   The shape of the test pieces is not particularly specified. However, the test is preferably carried out in three different locations that are 5 mm or more away from the edge of the test plate.
   The film thickness is preferably uniform among the test pieces.
6. Procedure
   6.1 Test conditions and number of tests
      - Unless otherwise specified, the test is carried out at a temperature of 23 ±2° and a relative humidity of 50 ±5%.
      - The test is carried out in at least three different locations on the test pieces.
   6.2 Curing of the test pieces
      - Unless otherwise specified, the test pieces are cured at least 16 hours at a temperature of 23 ±2° and a relative humidity of 50 ±5% immediately prior to testing.
   6.3 Cutting interval and number of cuts
      - Notches are formed at 1 mm intervals in the X direction of the grid pattern, and at 5 mm to 0.1 mm intervals in the Y direction.
      - Four notches are formed in the X direction, and 51 notches are formed in the Y direction.
      - A grid having a total of 150 squares is formed.
   6.4 Notching and removal of the film by manual procedure
      - Secure test pieces using a vice or the like.
      - Manually form notches in accordance with stipulated procedure. Inspect the blade portion prior to testing, and maintain the blade in proper condition by exchanging the blade.
      - Hold the notching tool so that the blade is perpendicular to the surface of the test piece. Apply uniform pressure to the notching tool and cut the stipulated number of film portions at a constant notching ratio using a suitable spacer.
      - All cuts must pass completely through the film to the surface of the base.
      - Perform cutting described in 6.3.
      - When it is difficult to form notches at an interval of 0.1 mm, suitable notches that gradually become narrower may be made, after which the intervals may be measured using a magnifying glass.
      - Adhesive tape may be used in order to remove film that has lost its adhesive strength. The adhesive tape may be saved for observation.
   6.5 Notching the film using an electric tool
      - Note the various points described for the manual procedure when a notching tool is to be used.
7. Describing the results
   The evaluation of the test results can be made immediately following removal of a film that has lost its adhesive strength.

The peeled film is observed from above using an observation device.

The interval of the peeled film and the interval of the film that has not peeled are quantified. The test results are obtained using two numerical values as required.

Adhesiveness is higher as the interval of the peeled portions decreases.

### <Characteristics of the second embodiment>

(1) In the second embodiment, it is possible to block the small pores of the porous sintered base 72 and to prevent a reduction in the surface activity of the porous sintered base 72 because an oxide film 78 is formed on the surface of the porous sintered base 72. The occurrence of red rust (Fe₂O₃) on the surface of the porous sintered base 72 can be prevented by forming the oxide film 78 composed of black Fe₃O₄. A reduction in the adhesiveness of the resin composition 73 can thereby be controlled, and productivity of the sliding member 71 can be improved.
(2) In the second embodiment, the small pores on the surface of the porous sintered base 72 are blocked, and machine oil or solid lubricant impregnated in the porous sintered base 72 can be prevented from seeping out to the boundary between the porous sintered base 72 and the resin composition 73 because the oxide film 78 is formed on the surface of the porous sintered base 72. A reduction in the adhesiveness of the resin composition 73 can be controlled to the same degree as in the case in which a porous sintered base not impregnated with oil is used, and the productivity of the sliding member 71 can be improved.
   Also, a reduction in the adhesiveness of the resin composition 73 can be similarly controlled even in the case of porous sintered bases 72 having differing porosities.
(3) In the second embodiment, the oxide film 78 having a predetermined thickness can be formed to a uniform thickness because the oxide film 78 is formed by treating the porous sintered base 72 with steam.

### INDUSTRIAL APPLICABILITY

The present invention can be applied to all varieties of sliding members as long as the sliding member has a porous sintered base and a resin composition coated onto the surface of the porous sintered base. The sliding member of the present invention is used in bearings and various other sliders. In particular, the sliding member of the present invention is preferably used as a bearing or the like of a CO₂ compressor operated under high temperature and high pressure. The sliding member can also be adopted as a bearing of other compressors.

The present invention can also be used both when the porous sintered base is impregnated with oil and when the preform is not impregnated with oil.

## Claims

1. A sliding member (1, 71) comprising:
a porous sintered base (2, 72) made of a porous sintered compact; and
a resin composition (3, 73) coated onto a surface of the porous sintered base (2, 72), wherein
a resin layer thickness t1, which is the thickness of the resin composition (3, 73), is a size obtained by adding 10 µm or more to a pore depth t2, which is the depth of pores (6) exposed on the surface of the porous sintered base (2, 72).

2. The sliding member (1, 71) according to claim 1, wherein the pore depth t2 is 15 µm or more.

3. The sliding member (1, 71) according to claim 1 or 2, wherein the resin composition (3, 73) includes polyamidoimide and polytetrafluoroethylene.

4. The sliding member (1, 71) according to any of claims 1 to 3, wherein the porosity, which is the volume ratio of the pores (6) to the porous sintered base (2, 72), is 10 to 30%.

5. The sliding member (1) according to any of claims 1 to 4, wherein the resin composition (3) is impregnated into the pores (6) exposed on the surface of the porous sintered base (2) by vacuum suction.

6. The sliding member (1) according to any of claims 1 to 5, wherein the percentage content of oil contained in the porous sintered base (2) is 5 wt% or less.

7. A fluidic machine, **characterized in** comprising the sliding member (1, 71) according to any of claims 1 to 6.

8. The fluidic machine according to claim 7, wherein the sliding member (1, 71) is a bearing.

9. The fluidic machine according to claim 8, wherein the refrigerant used is carbon dioxide.
